# EUROPEAN PATENT APPLICATION

(11) **EP 2 354 932 A1**
(43) Date of publication of application: **10.08.2011**
(21) Application number: 11150769.5
(22) Date of filing: 12.01.2011
(51) Int. Cl.: G06F 9/445

(54) **Computer system, method for booting a computer system, and method for replacing a component**

(30) Priority: 12.01.2010 GB 1000451
(71) Applicant: Fujitsu Services Limited, London W1U 3BW (GB)
(72) Inventor: Goettel, Olaf, Farnborough GU14 7HH (GB)
(74) Representative: Brandon, Paul Laurence

(57) **Abstract**

The invention relates to a computer system (1) comprising a system component (2) having at least one processor (5) and also at least one non-volatile memory chip (9) for storing at least one installed firmware component of the computer system (1). The computer system comprises a system monitoring chip (17), at least one internal expansion interface (15) which is functionally coupled to the system monitoring chip (17), and a non-volatile storage medium (16) which is connected to the internal expansion interface (15). The system monitoring chip (17) is set up such that, when the computer system (1) is started, it compares the installed firmware component of the non-volatile memory chip (9) with a desired firmware component of the non-volatile storage medium (16) and, upon finding a discrepancy between the installed firmware component and the desired firmware component, it starts the computer system (1) using the desired firmware component.

The invention also relates to a method for booting a computer system (1) and for replacing a component.

## Description

The invention relates to a computer system comprising a system component having at least one processor and also at least one non-volatile memory chip for storing at least one installed firmware component of the computer system and also a system monitoring chip which can be operated independently of the processor of the system component and is set up to monitor the operating state of the computer system. Furthermore, the invention relates to a method for booting such a computer system and to a method for replacing a component of such a computer system.

Computer systems having a system component and a system monitoring chip for monitoring the operating state of the computer system are known from the prior art. By way of example, DE 10 2006 043646 A1 discloses a computer system with a system component, having a processor for executing program codes and a first, non-volatile memory for storing first program code for starting the computer system, wherein the first non-volatile memory is operationally connected to the processor. The computer system has a system monitoring chip which is operationally connected to the processor and to the first non-volatile memory and which is set up to monitor the computer system for the occurrence of a predetermined condition. The system monitoring chip has a second non-volatile memory for storing second program code for starting the computer system and is set up such that, when the predetermined condition occurs, it copies the second program code from the second non-volatile memory to the first non-volatile memory.

The solution known from the prior art allows the program code in the first non-volatile memory of the computer system to be updated. In this case, the second program code stored in the system monitoring chip is largely protected against changes in manipulations.

The computer system known from the prior art also has a few drawbacks, however. In particular, the protection fails if, together with the system component, it is also necessary to replace the system monitoring chip. This is the case, for example, when the system component of the computer system on which both the first memory and the system monitoring chip with the second memory are permanently fitted needs to be replaced for maintenance purposes. In this case, a maintenance engineer assigned to the replacement needs to obtain the program code for starting the computer system in another way and must usually install it manually. Particularly in the case of customer-specific firmware components, this often results in complications, since the maintenance engineer usually has no access to the intranet of the manufacturer of the firmware component in situ. This often means that after maintenance the desired program code is not installed and the computer system does not operate reliably.

Furthermore, the solution known from the prior art is relatively expensive, since a specific system monitoring chip with a relatively large memory needs to be used.

There is therefore the need to refine a computer system of the aforementioned type such that even when a system component is replaced a current firmware component for the computer system can easily be provided. In addition, methods for booting the computer system and for replacing a component which needs to be replaced need to be described which are suitable for use with the refined computer system.

The invention achieves the object by means of a computer system of the aforementioned type which comprises at least one internal expansion interface, which is functionally coupled to the system monitoring chip, and a non-volatile storage medium, connected to the internal expansion interface, for storing at least one desired firmware component. In this case, the system monitoring chip is set up such that, when the computer system is started, it compares the installed firmware component with the desired firmware component and, upon finding a discrepancy between the installed firmware component and the desired firmware component, it starts the computer system using the desired firmware component.

The use of a non-volatile storage medium connected to an internal expansion interface allows a memory for desired firmware components of the computer system to be provided easily and inexpensively. The expansion interface is functionally coupled to the system monitoring chip, so that the system monitoring chip can check, when the computer system is started, whether the firmware component installed in the computer system corresponds to the desired firmware component stored on the storage medium. If the system monitoring chip finds a discrepancy, for example because the system component has been replaced with a non-volatile memory chip located thereon, the computer system can be started by the non-volatile storage medium using the desired firmware component.

Such a computer system allows particularly flexible replacement of components without the need for subsequent, manual installation of firmware components. Even if the system component is replaced with the system monitoring chip itself, it is sufficient to remove the storage medium from the old system component and connect it to the internal expansion interface of the new system component in order to provide a current version of the firmware component in the computer system.

In line with one advantageous embodiment, the computer system comprises an update component for updating the memory content of the at least one non-volatile memory chip. In this case, the system monitoring chip is additionally set up such that, upon finding a discrepancy between the installed firmware component and the desired firmware component, it uses the update component to copy the desired firmware component from the non-volatile storage medium to the at least one non-volatile memory chip. If the desired firmware component is additionally copied to the non-volatile memory chip of the system component, additional redundancy is created, which means that even if the non-volatile memory chip or the non-volatile storage medium is removed, destroyed or malfunctions, there is still a current and operational firmware component available for the computer system.

In line with a further advantageous component, a control component for the expansion interface, particularly a USB host controller, is contained in the system monitoring chip. If the system monitoring chip comprises a control component for the expansion interface, the data stored on the connected storage medium can easily be provided both for the system monitoring chip and for the processor of the system component.

The underlying object is likewise achieved by a method for booting a computer system having a system component and a system monitoring chip, having the following steps:
- connection of a non-volatile storage medium to an internal expansion interface of the system component,
- comparison of an installed firmware component of a non-volatile memory chip of the system component with a desired firmware component of the connected storage medium by the system monitoring chip, and
- staring of the computer system using the desired firmware component of the connected storage medium if the installed firmware component does not correspond to the desired firmware component.

The aforementioned method steps mean that, when the computer system is booted, it is possible to ensure that the computer system is respectively started with a desired firmware component.

The underlying object is likewise achieved by a method for replacing a component of a computer system with a non-volatile memory chip for storing a firmware component. The method comprises the following steps:
- copying of the firmware component from the non-volatile memory chip of the component which is to be replaced to a non-volatile storage medium connected to an internal expansion interface,
- replacement of the component which is to be replaced by a substitute component having a non-volatile memory chip for storing a firmware component,
- checking of whether the memory chip of the substitute component has a firmware component installed in it which corresponds to the firmware component stored on the storage medium, and
- copying of the firmware component from the storage medium to the memory chip of the substitute component if a discrepancy has been identified in the checking step.

The aforementioned steps allow system components and other components of the computer system to be easily replaced without the need for manual installation of a current firmware version following the replacement.

Further advantageous embodiments of the invention are disclosed in the subsequent detailed description of exemplary embodiments and the appended patent claims.

The invention is explained in more detail below with reference to different exemplary embodiments. In this case, elements of different exemplary embodiments with the same or a similar function are denoted by the same reference symbols in the figures, in which:
- Figure 1: shows a schematic illustration of a computer system in line with a first exemplary embodiment of the invention,
- Figure 2: shows a schematic illustration of a computer system in line with a second exemplary embodiment of the invention,
- Figure 3: shows a flowchart of a method for booting a computer system, and
- Figure 4: shows a flowchart of a method for replacing a component of a computer system.

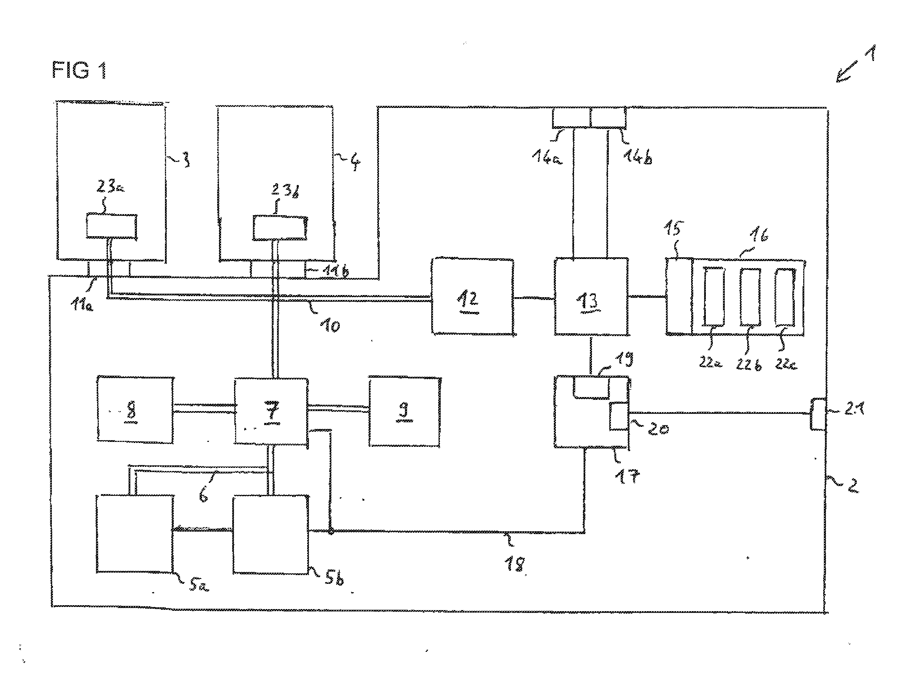

Figure 1 shows a schematic illustration of a computer system 1. The computer system 1 comprises a system component 2 and also two further components 3 and 4. The system component 2 is a system board. The component 3 is a graphics card. The further component 4 is a network card.

The system component 2 has a plurality of functional units arranged on it. In the exemplary embodiment, two processors 5a and 5b are connected to a central hub chip 7 by means of a processor bus 6. The hub chip 7 may also comprise a plurality of chips and is usually referred to as the chip set of the system component 2. The exemplary embodiment involves what is known as a hub architecture, in which all the essential functional units are coupled directly to the hub chip 7. The hub chip 7 has a main memory 8 connected to it. The main memory 8 and the hub chip 7 are connected to one another by means of a memory bus.

In addition, the hub chip 7 is connected to a non-volatile memory chip 9. The non-volatile memory chip 9 comprises at least one "firmware component" for operating the system component 2. By way of example, the non-volatile memory chip 9 comprises what is known as a piece of BIOS software for starting the computer system 1. Furthermore, the non-volatile memory chip 9 may comprise further firmware components, for example for actuating further internal and external functional units of the computer system 1.

In addition, the hub chip 7 is connected to an expansion bus 10 which is used for connecting further internal and external components of the computer system 1. By way of example, this is a PCI or PCI-express bus. In the exemplary embodiment, the components 3 and 4 are plugged into expansion slots 11a and 11b of the expansion bus. Furthermore, what is known as a USB host controller 12 is connected to the expansion bus 10. The USB host controller 12 is arranged directly on the system component 2, that is to say the system board.

The USB host controller 12 is connected to an internal USB hub 13, which is likewise arranged on the system component 2. The USB hub 13 allows a plurality of USB components to be connected to the USB host controller 12. In the exemplary embodiment, the internal USB hub 13 is connected to two USB interfaces 14a and 14b for connecting external USB devices. Furthermore, the USB hub 13 is connected to an internal interface 15. The internal interface 15 5 has a non-volatile storage medium 16 connected to it. In the exemplary embodiment, the non-volatile storage medium 16 is what is known as a USB stick with a capacity of 2 MB, for example.

The system component 2 also has what is known as a system monitoring chip 17 arranged on it, also known as a board management controller (BMC) or integrated remote management controller (iRMC). The system monitoring chip 17 is connected to the hub chip 7 and the processors 5a and 5b by means of a system management bus 18. In this arrangement, the system management bus 18 operates independently of the other bus systems of the computer system 1, that is to say particularly the processor bus 6 and the expansion bus 10. In this way, the system chip 17 continues to be operational even then and is able to monitor and possibly control the functional units connected to the system management bus 18 when an error occurs on the processor bus 6 or the expansion bus 10.

In the exemplary embodiment shown, the system monitoring chip 17 has a second USB host controller 19 integrated in it. The second USB host controller 19 is likewise connected to the internal USB hub 13. The system monitoring chip 17 can use the USB host controller 19 and the USB hub 13 to access the non-volatile storage medium 16 independently of the expansion bus 10 and the USB host controller 12 connected thereto. To this end, the non-volatile storage medium 16 is connected by the internal USB hub 13 to the second USB host controller 19 instead of the first USB host controller 12.

In addition, the system monitoring chip 17 comprises an internal network controller 20. The internal network controller 20 is connected to a management interface 21, for example a LAN interface. The management interface 21 can be used by a system administrator to remotely monitor or configure the system monitoring chip 17 and, indirectly via the system monitoring chip 17, also further components of the computer system 1.

In the exemplary embodiment, the non-volatile memory chip 16 comprises three memory areas 22a to 22c. The memory area 22a stores a current version of a firmware component of the non-volatile memory chip 9 of the system component 2. In the exemplary embodiment, the components 3 and 4 respectively comprise a dedicated non-volatile memory chip 23a or 23 with a respective firmware component. By way of example, the non-volatile memory chip 23a in the graphics component 3 stores a piece of firmware for operating the graphics component 3. Accordingly, the further non-volatile memory chip 23b of the component 4 stores a firmware component for operating a network card. Copies of said firmware components are stored in the memory areas 22b and 22c.

When the computer system 1 shown in Figure 1 is started, usually by virtue of the system component 2 being supplied with an operating voltage, the system monitoring chip 17 checks the firmware components installed in the non-volatile memory chip 9 and possibly in the further non-volatile memory chips 23a and 23b. To this end, the system monitoring chip 17 uses the system management bus 18 and the hub chip 7 to read a version number or CRC check number, for example, from the firmware components stored in the memory chips 9, 23a, 23b.

In addition, the system management chip 17 uses the second USB host controller 19 and the USB hub 13 to read the version of desired firmware components of the non-volatile storage medium 16 which are stored in the memory areas 22a to 22c. If the result of the check is that the firmware components stored in the memory chips 9, 23a or 23b do not correspond to the desired firmware components of the non-volatile storage medium 16, the system monitoring chip 17 ensures that the desired firmware components of the non-volatile storage medium 16 are used for starting.

In the exemplary embodiment, the system monitoring chip 17 does this by entering the non-volatile storage medium 16, connected to the internal interface 15, as a boot medium into the settings of the BIOS component as a further starting device. When a loading function of the BIOS program is executed by one of the processors 5a and 5b while the system is starting, the hub chip 7, the first USB host controller 12 and the USB hub 13 are therefore used to load data from the internal storage medium 16 into the main memory 8 and to execute them. By way of example, the storage medium 16 may contain not only the memory areas 22a to 22c with the desired firmware components but also a service program for updating the memory chip 9 or 23, said service program being executed when the computer system 1 is started if a discrepancy is found. The service program then copies the data from the non-volatile storage medium 16 to the non-volatile memory chips 9, 23a or 23b. The computer system is then reset 1 and executes the desired program code from the memory chips 9 and 23a or 23b upon the next start.

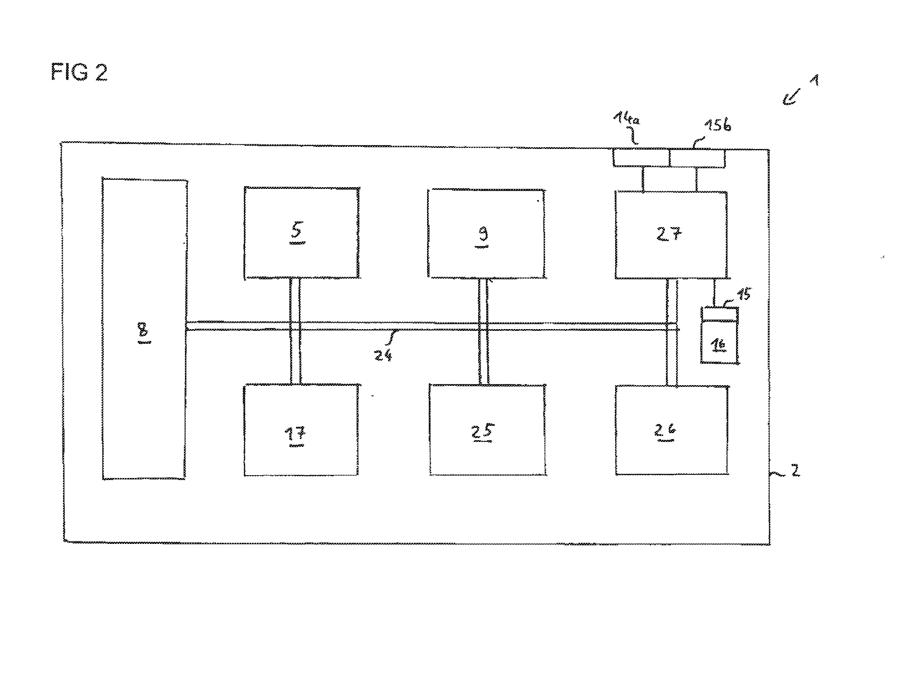

Figure 2 shows a further computer system 1 in line with a second exemplary embodiment of the invention. The computer system 1 has a system architecture which differs from the first exemplary embodiment. In particular, in Figure 2, all the essential functional units of the computer system 1 are connected to a common system bus 24.

The computer system 1 shown in Figure 2 likewise comprises a system component 2. The system component 2 holds a processor 5, a main memory 8, a non-volatile memory chip 9 with a BIOS program and a serial controller chip 27. Furthermore, the system component 2 holds a network controller 25 and a graphics controller 26. In contrast to the components 3 and 4 shown in Figure 1, these are functional units arranged directly on the system component 2.

In addition, the system component 2 comprises a system monitoring chip 17, which is likewise coupled to the system bus 24. Instead of a separate system management bus 18, the system monitoring chip 17 shown in Figure 2 can itself take control of the system bus 24. The system monitoring chip 17 is therefore able to use the system bus 24 to access the non-volatile memory chip 9 and the serial controller chip 27 while the system is starting.

The serial controller chip 27 is used for connecting different serial data sources. In the exemplary embodiment, two external USB interfaces 14a and 14b and an internal interface 15 are connected thereto. By way of example, the internal interface is a holder for a storage medium 16 based on the Micro Secure Digital (microSD) format. Whereas the external USB interfaces 14a and 14b are positioned on the system component 2 such that they allow the connection of external USB devices through an appropriate opening in a housing of the computer system 1, the internal interface 15 is arranged such that the storage medium 16 held therein is accessible only after the housing of the computer system 1 has been opened.

The manner of operation of the computer system 1 shown in Figure 2 is similar to the manner of operation described above with reference to Figure 1. In contrast to the example described previously, the system monitoring chip 17 first of all maintains control over the system bus 24 in order to compare a firmware component stored in the non-volatile memory chip 9 with a desired firmware component in the non-volatile storage medium 16. If a discrepancy is found, the system monitoring chip configures the computer system 1 such that during starting it accesses not the non-volatile memory chip 9 but rather the non-volatile storage medium 16. By way of example, the system monitoring chip can configure register values of a memory controller such that instead of the non-volatile memory chip 9 the non-volatile storage medium 16 is inserted into a particular address range in the address space of the computer system 1. Alternatively, a memory area 22 of the storage medium 16 is copied to the non-volatile memory chip 9. The system monitoring chip 17 then hands control to the processor 5 via the system bus 24.

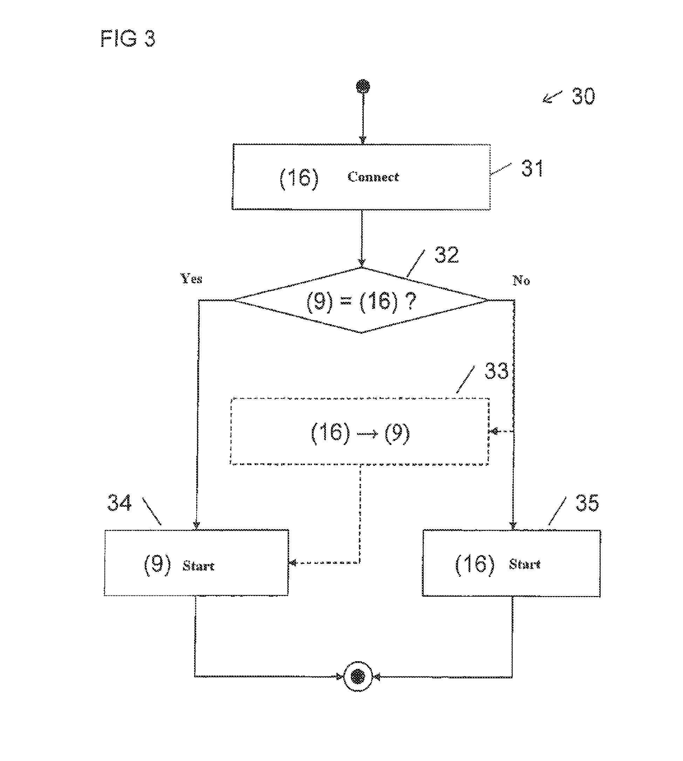

Figure 3 shows a method 30 for starting a computer system 1. In a first step 31, a non-volatile storage medium 16, for example a USB stick, is connected to an internal expansion interface 15 of a system component 2, particularly a system board of a computer system 1. Preferably, step 31 actually takes place before the computer system 1 is delivered. By way of example, the manufacturer of the computer system 1 can actually connect a non-volatile storage medium 16 to the internal expansion interface 15 which contains a version of firmware components for the computer system 1 that the customer desires.

In a step 32, the system monitoring chip 17 compares the firmware components which are installed in the computer system 1 with the firmware components which are stored on the non-volatile storage medium 16. By way of example, when the computer system is started, the addition of a boot entry for the second USB host control 19 activates the system monitoring chip 17. In line with one embodiment, the stored firmware versions are then compared with one another completely, that is to say byte by byte. Alternatively, the system monitoring chip 17 determines a respective identifier or hash value for the installed firmware component and the firmware component stored on the non-volatile storage medium 16, said identifier or hash value explicitly identifying the firmware component. In this case, only the two identifiers need to be compared with one another. Alternatively, the system monitoring chip 17 or the storage medium 16 may also contain a table with version information about known firmware components. By way of example, the system monitoring chip 17 can then ascertain a version of the firmware version stored in the non-volatile memory chip 9 by forming a hash value or by means of similar methods using the table.

In an optional step 33, on finding a discrepancy, the system monitoring chip 17 copies the desired firmware component from the non-volatile storage medium 16 to the non-volatile memory chip 9.

If no discrepancy is found in step 32 or the desired firmware component is copied to the non-volatile memory chip 9 in step 33, control is transferred from the system monitoring chip 17 back to the processor 5. By way of example, an appropriate message can be returned in response to the boot request for the second USB host controller 19, so that the processor 5 loads and executes the firmware from the non-volatile memory chip 9 in a step 34 in order to start the computer system 1.

If a discrepancy has been found between the installed firmware component of the non-volatile memory chip 9 and the desired firmware component of the non-volatile storage medium 16 in step 32 and the desired firmware component has not yet been copied to the non-volatile memory chip 9, the computer system 1 is configured such that it loads and executes the firmware component from the non-volatile storage medium 16 in a step 35. Optionally, a boot menu can also be shown which allows selection between starting the computer system with the firmware component installed in the non-volatile memory chip 9, the desired firmware component of the storage medium 16, and starting a service program for updating the memory chip 9 with another firmware component provided via a data network or an external storage medium.

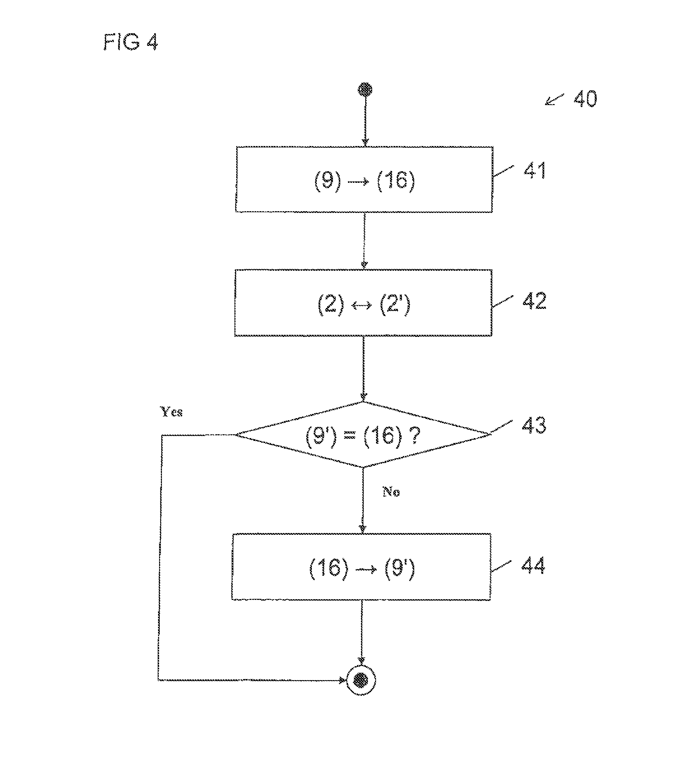

Figure 4 shows a method 40 for replacing a component which needs to be replaced in a computer system 1. The component to be replaced may be either the system component 2 with the processor 5 arranged thereon and the system monitoring chip 17 or any other component 3 or 4 of the computer system 1 which has a non-volatile memory chip 9 or 23 for storing firmware components.

In a first step 41, a firmware component is copied from a non-volatile memory chip 9 or 23 of the component which is to be replaced to the non-volatile storage medium 16. This step can be performed by the system monitoring chip 17 at regular intervals of time, for example. Alternatively, manual backup is also possible, for example using a system tool belonging to the maintenance engineer. Finally, it is also possible to use remote access to access the system monitoring chip 17 and to prompt backup of firmware components of the memory chips 9 and 23 on the storage medium 16. Such backup is usually still possible even if individual functional units of the computer system 1 are already non-operational, because the system monitoring chip 17 operates, as explained above, largely independently of the further functional units of the computer system 1.

In a step 42, the component 2, 3 or 4 to be replaced is replaced by a substitute component 2', 3' or 4'. To reduce maintenance costs, it is usual to replace entire assemblies of a computer system. By way of example, if there is a fault in a single functional unit of the system component 2, the entire system board with all the functional units located thereon is usually replaced. As an example, a faulty system component 2 or another component 3 or 4 can be replaced by an operational substitute component 2', 3' or 4'.

In a step 43, the system monitoring chip 17 checks whether a firmware component which corresponds to the firmware component stored on the storage medium 16 is installed in a memory chip 9' or 23' of the substitute component 2', 3' or 4'. If this is the case, the firmware of the substitute component is thus already at the desired level, and no further steps are necessary. In one advantageous embodiment, it is first of all established which components have changed since the last check. By way of example, this can be done by virtue of an explicit serial number for each component being read by the system monitoring chip 17 and being compared with values stored in the system monitoring chip 17 or on the storage medium 16.

If it is established in step 43 that the desired firmware component is not located in the non-volatile memory chip 9' or 23' of the substitute component, the desired firmware component is copied in a step 44 from the storage medium 16 to the memory chip 9' or 23' of the substitute component. In this way, as described above, redundancy is produced between the firmware components stored in the memory chips 9' and 23' and the storage medium 16.

The computer systems 1 and methods 30 and 40 described above are suitable not only for backing up a correctly installed firmware component in the event of a fault or replacement of individual components 2, 3 or 4 of a computer system 1. On the contrary, they also allow a specific upgrade or downgrade, that is to say the replacement of an installed piece of firmware with a more recent or earlier version of the firmware by replacing the storage medium 16 in the computer system 1. If a more recent piece of firmware installed on the system component 2 is found not to be as reliable as originally assumed, or if it even prevents the computer system 1 from starting successfully, simply replacing the storage medium 16 with another non-volatile storage medium 16 on which an original firmware version is also stored allows the original state of the computer system 1 to be restored. This is advantageous particularly if any update mechanisms in the BIOS or other firmware components provide only an update but not a return to an earlier version.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

### List of Reference Symbols

- 1: Computer system
- 2: System component (system board)
- 3: Component (graphics card)
- 4: Component (Network card)
- 5: Processor
- 6: Processor bus
- 7: Hub chip
- 8: Main memory
- 9: Non-volatile memory chip
- 10: Expansion bus
- 11: Expansion slot
- 12: First USB host controller
- 13: USB hub
- 14: USB interface
- 15: internal interface
- 16: Non-volatile storage medium
- 17: System monitoring chip
- 18: System management bus
- 19: Second USB host controller
- 20: Network controller
- 21: Management interface
- 22: Memory area
- 23: Further non-volatile memory chip
- 24: System bus
- 25: Network controller
- 26: Graphics controller
- 27: Serial controller chip
- 30: Method for booting a computer system
- 31 to 35: Method steps
- 40: Method for replacing a component which needs to be replaced
- 41 to 43: Method steps

## Claims

1. Computer system (1), comprising:
- a system component (2) having at least one processor (5) and at least one non-volatile memory chip (9) for storing at least one installed firmware component of the computer system (1),
- a system monitoring chip (17) which can be operated independently of the processor (5) of the system component (2) and which can monitor the operating state of the computer system (1),
- at least one internal expansion interface (15) which is functionally coupled to the system monitoring chip (17), and
- a non-volatile storage medium (16), connected to the internal expansion interface (15), for storing at least one desired firmware component,
- wherein the system monitoring chip (17) is set up such that, when the computer system (1) is started, it compares the installed firmware component with the desired firmware component and, upon finding a discrepancy between the installed firmware component and the desired firmware component, it starts the computer system (1) using the desired firmware component.

2. Computer system (1) according to Claim 1,
further comprising an update component for updating the memory content of the at least one non-volatile memory chip (9), wherein the system monitoring chip (17) is additionally set up such that, upon finding a discrepancy between the installed firmware component and the desired firmware component, it uses the update component to copy the desired firmware component from the non-volatile storage medium (16) to the at least one non-volatile memory chip (9).

3. Computer system (1) according to Claim 1 or 2,
further comprising a network interface (21) for connecting the system monitoring chip (17) to a data network, wherein the system monitoring chip (17) is additionally set up to update the desired firmware on the non-volatile storage medium (16) with a version of the firmware component which has been received via the data network.

4. Computer system (1) according to one of Claims 1 to 3,
wherein
the processor (5) and the non-volatile memory chip (9) are coupled to one another by means of at least one first bus (6, 10), and the system monitoring chip (17) is coupled to the processor (5) and to the non-volatile memory chip (9) by means of at least one system management bus (18) which can be operated independently of the first bus (6, 10).

5. Computer system (1) according to one of Claims 1 to 4,
wherein
a control component for the expansion interface (15), particularly a USB host controller (19), is contained in the system monitoring chip (17).

6. Method (30) for booting a computer system (1) having a system component (2) and a system monitoring chip (17), comprising:
- connection of a non-volatile storage medium (16) to an internal expansion interface (15) of the system component (2),
- comparison of an installed firmware component of a non-volatile memory chip (9) of the system component (2) with a desired firmware component of the connected storage medium (16) by the system monitoring chip (17), and
- staring of the computer system (1) using the desired firmware component of the connected storage medium (16) if the installed firmware component does not correspond to the desired firmware component.

7. Method (30) according to Claim 6,
wherein in the starting step the following steps are performed:
- addition of the non-volatile storage medium (16) to a list of devices for starting the system,
- loading of the desired firmware component from the non-volatile storage medium (16) into a main memory (8), and
- execution of the desired firmware component by a processor (5) of the system component (2).

8. Method according to Claim 6,
wherein in the starting step the following steps are performed:
- copying of the desired firmware component from the non-volatile storage medium (16) to the non-volatile memory chip (9) by the system monitoring chip (17),
- loading of the desired firmware component from the non-volatile memory chip (9) into a main memory (8), and
- execution of the desired firmware component by a processor (5) of the system component (2).

9. Method (30) according to one of Claims 6 to 8,
further comprising the following additional step:
- updating of the desired firmware component on the storage medium (16) by the system monitoring component (17).

10. Method (40) for replacing a component (2, 3, 4) of a computer system (1) with a non-volatile memory chip (9, 23) for storing a firmware component, comprising:
- copying of the firmware component from the non-volatile memory chip (9, 23) of the component (2, 3, 4) which is to be replaced to a non-volatile storage medium (16) connected to an internal expansion interface (15),
- replacement of the component (2, 3, 4) which is to be replaced by a substitute component (2', 3', 4') having a non-volatile memory chip (9', 23') for storing the firmware component,
- checking of whether the memory chip (9', 23') of the substitute component (2', 3', 4') has a firmware component installed in it which corresponds to the firmware component stored on the storage medium (16), and
- copying of the firmware component from the storage medium (16) to the memory chip (9', 23') of the substitute component (2', 3', 4') if a discrepancy has been identified in the checking step.
